# FASCICULE DE BREVET EUROPEEN

(11) **EP 2 413 565 B1**
(45) Date de publication et mention de la délivrance du brevet: **29.08.2018**
(21) Numéro de dépôt: 11305982.8
(22) Date de dépôt: 28.07.2011
(51) Int. Cl.: H04L 29/06, H04L 29/08

(54) **Téléphone mobile comprenant un serveur de diffusion en flux avec des moyens de commande de la transformation d'un fichier avant sa diffusion**
Mobiltelefon mit Streaming-Server mit Mitteln zur Steuerung der Verarbeitung einer Datei vor der Veröffentlichung
Mobile phone includes a streaming server with means for controlling the transformation of a file before its release

(30) Priorité: 29.07.2010 FR 1056259
(43) Date de publication de la demande: 01.02.2012
(73) Titulaire: Myriad Group AG, 8001 Zürich (CH)
(72) Inventeur: Renou, Olivier Yves Marc, 73000 CHAMBERY (FR)
(74) Mandataire: D Young & Co LLP

(56) Documents cités:
- WO-A2-2008/143493
- JP-A- 2009 258 916
- US-A1- 2007 283 048
- Jon Healey: "CES: Beamed from the phone to the TV screen", LA Times , 9 janvier 2010 (2010-01-09), pages 1-2, XP002624399, Extrait de l'Internet: URL:http://latimesblogs.latimes.com/techno logy/2010/01/ces-beamed-from-the-phone-to- the-tv-screen.html [extrait le 2011-02-22]
- Jason: "twonky live transcoding", QNAP NAS Community Forum , 13 janvier 2010 (2010-01-13), XP002624514, Extrait de l'Internet: URL:http://forum.qnap.com/viewtopic.php?f= 177&t=24763 [extrait le 2011-02-22]
- Alexander Grundner: "Smartphone Version of Twonky Media's DLNA / UPNP Server now available", e Home Upgrade , 7 janvier 2010 (2010-01-07), page 2PP, XP002624397, Extrait de l'Internet: URL:http://www.ehomeupgrade.com/2010/01/07 /smartphone-version-of-twonkymedias-dlna-u pnp-server-now-available/ [extrait le 2011-02-22]
- Anonymous: "Twonky Mobile Apps", Twonky , 2010, page 2PP, XP002627142, Extrait de l'Internet: URL:http://www.twonkymedia.com/products/tw onkymobile/default.aspx [extrait le 2011-02-22]
- Anonymous: "Twonkymedia goes mobile with android launch at ces", Twonky , 7 janvier 2010 (2010-01-07), page 2PP, XP002627143, Extrait de l'Internet: URL:http://www.twonkymedia.com/upfiles/CES %202010%20TwonkyServer%20Mobile%20FINAL.pd f [extrait le 2011-02-22]
- Taylor Wimberly: "TwonkyServer Mobile: media server in your pocket", Twonky , 8 janvier 2010 (2010-01-08), pages 1-3, XP002624398, Extrait de l'Internet: URL:http://androidandme.com/2010/01/news/t wonkyserver-mobile-media-server-in-your-po cket/ [extrait le 2011-02-22]
- Anonymous: "Samsung Galaxy S GT-19000 quick start guide", Samsung , 1 juillet 2010 (2010-07-01), pages 1-58, XP002624407, Extrait de l'Internet: URL:http://downloadcenter.samsung.com/cont ent/EM/201007/20100716085606250/GT-I9000_Q SG_EU_Eng_Rev.1.1_100715.pdf [extrait le 2011-02-22]

## Description

La présente invention est définie par les revendications ci-après, et la présente description concerne un téléphone mobile du type comprenant :
- une première mémoire tampon de stockage d'un fichier de données, le fichier de données étant dans un premier format et comportant une pluralité de paquets de données,
- des moyens de transformation du fichier stocké dans la première mémoire tampon, du premier format dans un deuxième format, les moyens de transformation étant connectés en sortie de la première mémoire tampon,
- une deuxième mémoire tampon connectée en sortie des moyens de transformation et propre à stocker le fichier transformé dans le deuxième format,
- un serveur de diffusion en flux de données à destination d'un équipement client distant suivant un protocole réseau prédéterminé, le serveur de diffusion en flux étant propre à être relié à l'équipement client distant via une liaison de données et à recevoir, de la part de l'équipement client distant, une requête de diffusion de données.

L'invention concerne également un réseau local de transmission de données comportant un tel téléphone mobile et un équipement client distant relié au téléphone mobile via une liaison de données, le téléphone mobile et l'équipement client distant étant propres à communiquer suivant un protocole réseau prédéterminé.

On connaît un téléphone mobile du type précité. Le téléphone mobile comporte un serveur de diffusion en flux généralement compatible avec le protocole réseau UPnP (de l'anglais Universal Plug and Play), ou encore respectivement avec le standard d'interopérabilité DLNA (de l'anglais Digital Living Network Alliance), le serveur étant alors appelé serveur UPnP, respectivement serveur DLNA. Un tel serveur permet de diffuser en flux un média enregistré dans une mémoire interne du téléphone à destination d'un équipement client distant également compatible avec le protocole réseau UPnP, ou encore avec le standard DLNA. Le média diffusé en flux comporte des données audio et/ou vidéo. Le téléphone mobile comporte également des moyens de transformation du fichier stocké dans la mémoire interne, tels qu'une application de transcodage lorsque le format du média enregistré dans la mémoire, et destiné à être diffusé en flux vers l'équipement client distant, n'est pas compatible avec les formats supportés par l'équipement client distant.

WO 2008/143493 décrit un système de diffusion multimédia et son procédé.

US 2007/283048 décrit un procédé, un dispositif et un produit de programme informatique de transcodage universel d'information.

Toutefois, la diffusion d'un fichier dont le format n'est pas supporté par l'équipement client distant est relativement complexe à mettre en oeuvre par l'utilisateur sur un tel téléphone mobile, fonctionnant en particulier sous un système d'exploitation de type Android. L'utilisateur doit commencer par exécuter l'application de transcodage, afin...
de transcoder le fichier à diffuser de son format initial vers un format supporté par l'équipement client distant. Cette opération nécessite notamment pour l'utilisateur de sélectionner le fichier à transcoder, de choisir le format de sortie adapté, et d'indiquer un emplacement de la mémoire interne pour le stockage du fichier transcodé. L'utilisateur doit alors sélectionner à l'aide d'un contrôleur UPnP, ou respectivement DLNA, le fichier transcodé pour sa diffusion en flux par le serveur de diffusion.

Le but de l'invention est de proposer un téléphone mobile comprenant un serveur de diffusion en flux et des moyens de transformation d'un fichier d'un premier format vers un deuxième format, permettant de faciliter la diffusion en flux d'un fichier dont le format n'est pas supporté par l'équipement client distant.

A cet effet, l'invention a pour objet un téléphone mobile du type précité, caractérisé en ce que le serveur de diffusion en flux comporte des moyens de commande des moyens de transformation, les moyens de commande étant propres à envoyer aux moyens de transformation un signal de commande de la transformation d'un paquet respectif du fichier.

Suivant d'autres modes de réalisation, le téléphone mobile comprend une ou plusieurs des caractéristiques suivantes, prises isolément ou suivant toutes les combinaisons techniquement possibles :
- le serveur de diffusion en flux est propre à transmettre à l'équipement client distant au moins un paquet transformé et stocké dans la deuxième mémoire tampon, en l'absence de la transformation de l'ensemble des paquets du fichier ;
- le serveur de diffusion en flux est propre à transmettre simultanément une pluralité de paquets transformés à l'équipement client distant ;
- les moyens de transformation comprennent des moyens de transcodage audio et/ou vidéo, le premier et le deuxième format comportant des attributs audio et/ou vidéo, et lesdits attributs audio et/ou vidéo du deuxième format étant distincts de ceux du premier format ;
- les moyens de transformation comprennent des moyens de déchiffrement, le premier format correspondant à des données chiffrées ;
- les moyens de transformation comprennent des moyens de chiffrement, le deuxième format correspondant à des données chiffrées ;
- le téléphone mobile comprend en outre des moyens de téléchargement de données depuis un serveur web, le fichier comportant une pluralité de blocs de données, les moyens de téléchargement étant propres à télécharger, bloc par bloc, le fichier de données dans la première mémoire tampon, et les moyens de commande étant propres à envoyer les signaux de commande aux moyens de transformation, en l'absence du téléchargement de l'ensemble des blocs du fichier.

L'invention a également pour objet un réseau local de transmission de données du type précité, caractérisé en ce que le téléphone mobile est tel que défini ci-dessus.

L'invention a également pour objet un procédé mis en oeuvre par un téléphone mobile comprenant une première mémoire tampon, des moyens de transformation de données d'un premier format dans un deuxième format, les moyens de transformation étant connectés en sortie de la première mémoire tampon, une deuxième mémoire tampon connectée en sortie des moyens de transformation, et un serveur de diffusion en flux propre à être relié à un équipement client distant via une liaison de données, et à recevoir, de la part de l'équipement client distant, une requête de diffusion de données,
le procédé comprenant :
- le stockage d'un fichier de données dans la première mémoire tampon, le fichier de données étant dans un premier format et comportant une pluralité de paquets de données,
- l'émission par le serveur de diffusion d'un signal de commande aux moyens de transformation,
- la transformation par les moyens de transformation d'un paquet respectif du fichier, sur réception dudit signal de commande, et
- le stockage du paquet respectif transformé dans la deuxième mémoire tampon.

L'invention a également pour objet un produit programme d'ordinateur comportant des instructions qui, lorsqu'elles sont mises en oeuvre par un calculateur intégré à un téléphone mobile, met en oeuvre le procédé tel que défini ci-dessus.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un réseau local de transmission de données comportant un téléphone mobile selon l'invention,
- la figure 2 est un organigramme d'un procédé mis en oeuvre par le téléphone mobile de la figure 1,
- la figure 3 est une représentation schématique de l'interface homme-machine du téléphone mobile lors de deux phases successives d'une étape d'initialisation d'un serveur du téléphone mobile,
- la figure 4 est une représentation schématique de l'interface homme-machine du téléphone mobile lors de phases successives d'une étape de sélection d'une vidéo à diffuser en flux, et
- les figures 5 à 7 représentent schématiquement la transformation de différents paquets d'un fichier avant leur diffusion en flux par le serveur pour différents couples de valeurs d'une première taille de paquet associée à un premier format d'un fichier, téléchargé ou stocké dans une mémoire interne du téléphone et destiné à être émis à un équipement client distant du réseau local, et d'une deuxième taille de paquet associée à un deuxième format correspondant au format de restitution par l'équipement client distant du fichier reçu du téléphone mobile.

L'invention s'applique en particulier à un téléphone mobile fonctionnant sous le système d'exploitation Android® de la société Google. En variante, l'invention s'applique à un téléphone mobile fonctionnant sous n'importe quel système d'exploitation de même type que le système d'exploitation Android®.

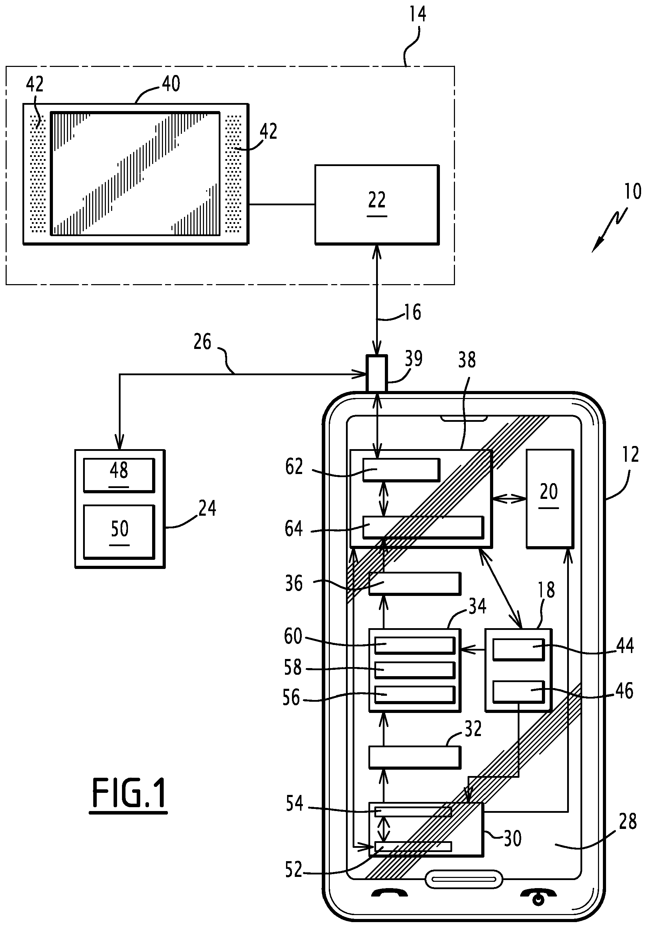

Sur la figure 1, un réseau local 10 de transmission de données comprend un téléphone mobile 12 et un équipement client distant 14 relié au téléphone mobile via une première liaison radioélectrique 16. Le téléphone mobile 12 et l'équipement client distant 14 sont propres à communiquer suivant un protocole réseau prédéterminé.

Le protocole réseau prédéterminé est conforme à la norme ISO/IEC 29341, et est également appelé protocole réseau UPnP (de l'anglais Universal Plug and Play).

En complément, le protocole réseau prédéterminé est également conforme au standard d'interopérabilité DLNA (de l'anglais Digital Living Network Alliance).

Conformément à la norme UPnP ou au standard DLNA, le réseau local de transmission 10 comporte un serveur de diffusion en flux 18, également appelé serveur de média (de l'anglais Media Server), un dispositif de contrôle à distance 20 (de l'anglais Remote Control), et un dispositif client 22, également appelé moteur de rendu (de l'anglais Renderer).

Lorsque le protocole réseau prédéterminé est un protocole UPnP, le serveur de diffusion en flux 18, le dispositif de contrôle 20 et le moteur de rendu 22 sont respectivement appelés serveur UPnP, contrôleur UPnP et client UPnP.

Lorsque le protocole réseau prédéterminé est conforme en outre au standard DLNA, le serveur de diffusion en flux 18, le dispositif de contrôle 20 et le dispositif client 22 sont respectivement appelés serveur DLNA, contrôleur DLNA et client DLNA.

Dans l'exemple de réalisation de la figure 1, le téléphone mobile 12, représenté sous forme de modules fonctionnels, comporte le serveur de diffusion en flux 18 et le dispositif de contrôle 20. L'équipement client distant 14 comporte le dispositif client 22.

En variante, le téléphone mobile comporte le serveur de diffusion en flux, mais ne comporte pas le dispositif de contrôle, un appareil électronique indépendant comprenant ledit dispositif de contrôle. L'équipement client distant comporte le dispositif client.

En variante, le téléphone mobile comporte le serveur de diffusion en flux, mais ne comporte pas le dispositif de contrôle, l'équipement client distant comprenant à la fois le dispositif de contrôle et le dispositif client.

Le téléphone mobile 12 est également relié à un serveur web 24 par l'intermédiaire d'une deuxième liaison radioélectrique 26.

Le téléphone mobile 12 comprend un écran d'affichage 28, associé à des moyens, non représentés, d'affichage d'une image à l'écran, et un navigateur web 30.

Le téléphone mobile 12 comporte une première mémoire tampon 32 connectée en sortie du navigateur web 30, des moyens 34 de transformation d'un fichier stocké dans la première mémoire tampon d'un premier format vers un deuxième format, les moyens de transformation 34 étant connectés en sortie de la première mémoire tampon, et une deuxième mémoire tampon 36 connectée en sortie des moyens de transformation.

Le téléphone mobile 12 comporte également un émetteur-récepteur radioélectrique 38 et une antenne radioélectrique 39.

Le téléphone mobile 12 comporte une unité de traitement d'informations formée, par exemple, d'un processeur de données associé à une mémoire, non représentés. L'unité de traitement est également appelée calculateur. La mémoire comporte les première et deuxième mémoires tampon 32, 36 et est apte à stocker différents logiciels. Le serveur de diffusion en flux 18, le dispositif de contrôle 20, les moyens de téléchargement 28, et les moyens de transformation 34 comportent respectivement un logiciel serveur de diffusion en flux, un logiciel de contrôle, un logiciel de navigation web et de téléchargement de données depuis le serveur web, et un logiciel de transformation du fichier du premier format vers le deuxième format.

L'équipement client distant 14 comporte le dispositif client 22, ainsi qu'un écran 40 d'affichage de données vidéo issues du dispositif client 22 et des haut-parleurs 42 de reproduction de données audio issues du dispositif client.

La liaison radioélectrique 16 est conforme à la norme IEEE 802.11, également appelée norme Wi-Fi™, ou encore à la norme IEEE 802.15, également appelée norme Bluetooth®.

Le serveur de diffusion en flux 18 est relié au dispositif client 22 de l'équipement client distant via l'émetteur-récepteur 38 et la liaison radioélectrique 16. Le serveur de diffusion en flux 18, le dispositif de contrôle 20 et le dispositif client 22 sont propres à communiquer par un protocole de transfert hypertexte, tel que le protocole HTTP (de l'anglais HyperText Transfer Protocol).

Le serveur de diffusion en flux 18 est propre à recevoir, de la part du dispositif client 22 de l'équipement client, une requête de diffusion de données, et à transmettre en réponse des données à destination dudit dispositif client 22 suivant le protocole réseau prédéterminé.

Le serveur de diffusion en flux 18 comporte selon l'invention des moyens 44 de commande des moyens de transformation, le serveur de diffusion en flux 18 étant propre à transmettre le fichier transformé à l'équipement client distant 14 par l'intermédiaire de l'émetteur-récepteur 38.

Le serveur de diffusion en flux 18 comporte également des moyens 46 d'activation du navigateur web 30 pour le téléchargement d'un fichier depuis un serveur web. Le serveur de diffusion en flux 18 est propre à activer le téléchargement du fichier depuis le serveur web 24, à commander la transformation du fichier téléchargé, puis à transmettre le fichier téléchargé et transformé à l'équipement client distant 14 par l'intermédiaire de l'émetteur-récepteur 38.

Le serveur web 24 comporte une unité de traitement d'informations formée, par exemple, d'un processeur de données 48 associé à une mémoire 50. La mémoire est apte à stocker un logiciel de communication avec les moyens de téléchargement 30 du téléphone mobile.

Le navigateur web 30 est connecté à l'émetteur-récepteur 38, et comporte des moyens 52 de téléchargement d'un fichier depuis n'importe quel serveur web, associé à une mémoire tampon de téléchargement 54. La mémoire tampon de téléchargement 54 est connectée en entrée de la première mémoire tampon 32. Les moyens de téléchargement 52 sont propres à télécharger, bloc par bloc, le fichier de données dans la première mémoire tampon 32, le fichier comportant une pluralité de blocs de données. En variante, les moyens de téléchargement 52 sont indépendants du navigateur web 30.

Chaque fichier dans la première mémoire tampon 32, téléchargé par les moyens de téléchargement 52 ou bien préalablement enregistré, est selon un premier format, et le dispositif client 22 de l'équipement client distant est compatible d'un second format. Le premier et le deuxième format comportent des attributs image ou audio et/ou vidéo. Chaque fichier comporte une pluralité de paquets. Une première taille de paquet est associée au premier format d'un fichier, et une deuxième taille de paquet est associée au deuxième format.

Lorsque le fichier est une image, les attributs sont, par exemple, les dimensions de l'image et le codec utilisé. Lorsque le fichier est un fichier audio, les attributs sont, par exemple, le débit binaire audio (de l'anglais audio bitrate), la fréquence d'échantillonnage, le nombre de canaux (mono, stéréo, 5.1, 7.1) et le codec utilisé. Lorsque le fichier est un fichier vidéo, les attributs sont, par exemple, les dimensions de l'image, le codec utilisé, le nombre d'images par seconde, également appelé taux de trame (de l'anglais framerate) et le débit binaire (de l'anglais bitrate).

Les moyens de transformation 34 sont propres à transformer chaque fichier, téléchargé ou préalablement enregistré, du premier format vers le second format, puis à stocker le fichier transformé dans la deuxième mémoire tampon 36. Les moyens de transformation 34 sont propres à transformer le fichier de données, paquet par paquet.

Les moyens de transformation 34 comprennent des moyens de déchiffrement 56, propres à déchiffrer le fichier, téléchargé ou préalablement enregistré, lorsque le premier format correspond à des données chiffrées.

Les moyens de transformation 34 comprennent des moyens de transcodage audio et/ou vidéo 58, propres à transcoder le fichier, téléchargé ou préalablement enregistré, éventuellement déchiffré, lorsque les attributs audio et/ou vidéo du deuxième format sont distincts de ceux du premier format.

Les moyens de transformation 34 comprennent des moyens de chiffrement 60, propres à chiffrer le fichier, téléchargé ou préalablement enregistré, éventuellement déchiffré et/ou transcodé, lorsque le deuxième format correspond à des données chiffrées.

L'émetteur-récepteur radioélectrique 38 comporte des moyens 62 d'émission et de réception de signaux radioélectriques et une mémoire tampon d'émission-réception 64. Les moyens d'émission-réception 62 sont reliés à l'antenne radioélectrique 39, et la mémoire tampon d'émission-réception 64 est connectée entre la deuxième mémoire tampon 36 et les moyens d'émission-réception 62.

Selon l'invention, les moyens de commande 44 sont propres à envoyer aux moyens de transformation 34 un signal de commande de la transformation d'un paquet respectif du fichier.

Selon un autre aspect de l'invention, les moyens de commande 44 sont propres à envoyer les signaux de commande aux moyens de transformation 34, en l'absence du téléchargement de l'ensemble des blocs du fichier lorsque le fichier à transformer est un fichier téléchargé depuis le serveur web 24.

Selon un autre aspect de l'invention, le serveur de diffusion en flux 18 est propre à transmettre à l'équipement client distant 14 au moins un paquet transformé et stocké dans la deuxième mémoire tampon 36, en l'absence de la transformation de l'ensemble des paquets du fichier. Le serveur de diffusion en flux 18 est, par exemple, propre à transmettre simultanément une pluralité de paquets transformés à l'équipement client distant.

Le fichier est, par exemple, émis par morceaux depuis le serveur de diffusion 18 à destination de l'équipement client distant 14, la taille de chaque morceau étant fixée par l'équipement client distant 14. Le nombre de paquets transmis simultanément, noté Nt, est alors déterminé de sorte que la taille totale des Nt paquets soit supérieure ou égale à la taille du morceau. Si la taille totale des Nt paquets est supérieure à la taille du morceau, alors le dernier paquet est tronqué en deux parties, la première partie étant envoyée dans le morceau courant, et la seconde partie étant envoyée dans le morceau suivant.

Les moyens d'activation 46 sont propres à activer le téléchargement du fichier de données depuis le serveur web 24, lorsque la requête en diffusion émise par le dispositif client 22 contient une adresse web, également connue sous le nom d'adresse URL (de l'anglais Uniform Ressource Locator), correspondant au serveur web 24.

Les moyens de transcodage audio et/ou vidéo 58 comportent des moyens de décodage, également appelés moyens de décompression, des moyens de changement d'attributs audio et/ou vidéo, et des moyens d'encodage, non représentés.

Le fonctionnement du réseau local de transmission 10 selon l'invention va être expliqué par la suite à l'aide des figues 2 à 5.

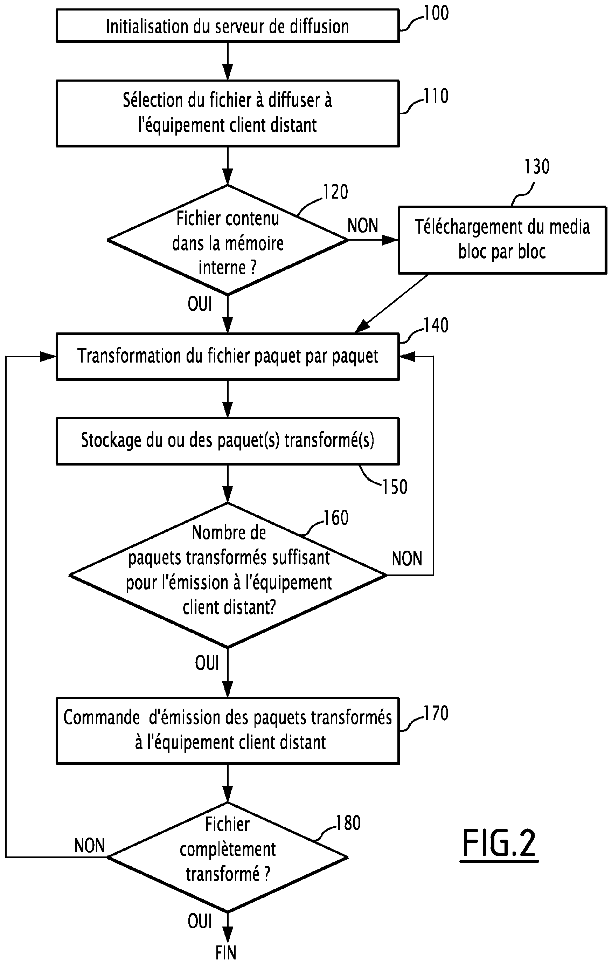

La figure 2 illustre un procédé de diffusion en flux d'un fichier depuis le serveur 18 à destination de l'équipement client distant 14.

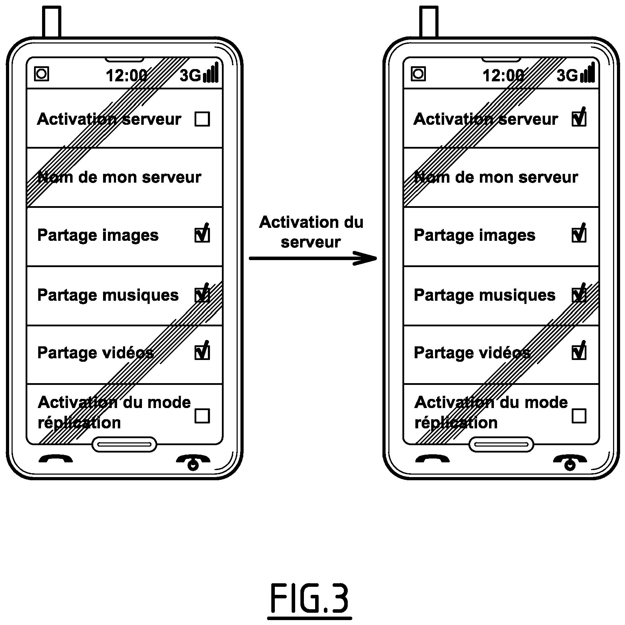

Lors de l'étape initiale 100, l'utilisateur commence par autoriser le partage de tout type de fichier depuis le téléphone 12, tel qu'une image, une image, ou une vidéo, en cochant les cases respectives « Partage images », « Partage musiques », « Partage vidéos », comme représenté sur la figure 3. L'utilisateur active ensuite le serveur de diffusion 18 en cochant la case « Activation serveur ».

A l'issue de cette étape initiale, le serveur de diffusion 18 du téléphone est prêt pour émettre, via ses moyens d'activation 46, des signaux d'activation aux moyens de téléchargement 52, dès réception de la part de l'équipement client distant 14 d'une requête en diffusion avec une URL correspondant au serveur web 24.

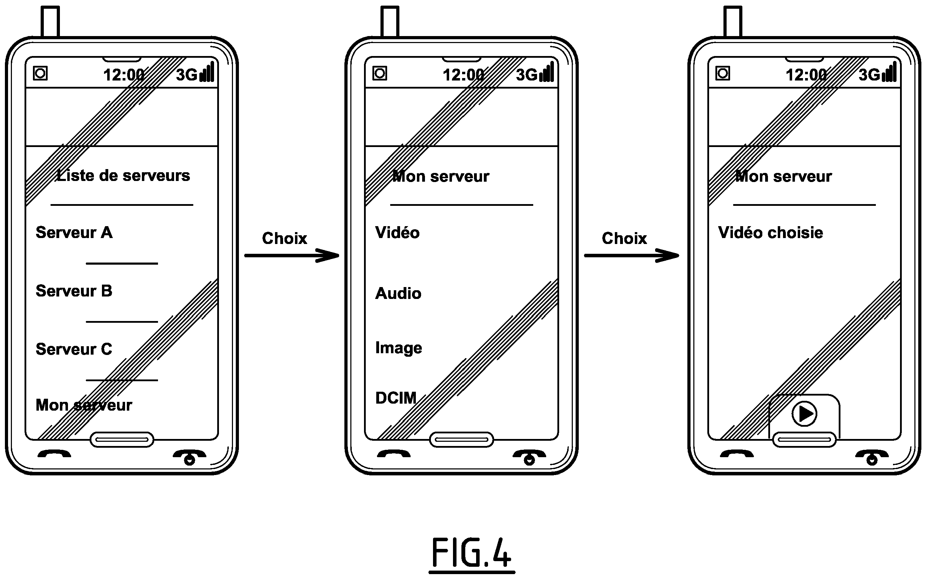

Après avoir activé le serveur de diffusion 18, l'utilisateur consulte, lors de l'étape 110, via le dispositif de contrôle 20, la liste des serveurs de diffusion disponibles, et choisit, par exemple, le serveur 18 préalablement activé, appelé « Mon serveur» dans l'exemple de réalisation de la figure 4. Lorsque l'utilisateur a sélectionné le serveur 18, le dispositif de contrôle 20 envoie une requête au serveur 18 afin de disposer d'une liste des répertoires de médias susceptibles d'être diffusés en flux, et le serveur y répond en communiquant la liste de répertoires. Dans l'exemple de la figure 4, l'utilisateur choisit alors le répertoire « Vidéo », qui contient un fichier vidéo appelé « Vidéo choisie », la liste de vidéo(s) contenue(s) dans le répertoire « Vidéo » étant obtenue par requête du dispositif de contrôle 20 au serveur de diffusion 18. Dans l'exemple de la figure 4, le fichier « Vidéo choisie » est déjà enregistré dans la première mémoire tampon 32.

En sélectionnant le fichier vidéo « Vidéo choisie », l'utilisateur autorise le début de la diffusion en flux à destination de l'équipement client distant 14. Le dispositif de contrôle 20 envoie ensuite une requête au serveur de diffusion 18 afin d'obtenir une adresse web, également connue sous le nom d'adresse URL (de l'anglais Uniform Ressource Locator), associée audit fichier vidéo « Vidéo choisie ».

En réponse, le serveur de diffusion 18 renvoie une liste d'URL, la première URL correspondant à un format par défaut, et les URL suivantes correspondant à des formats de données transformées. En complément de la liste d'URL, le serveur de diffusion 18 renvoie aussi une liste des formats proposés, chaque format étant associé à une URL. Le dispositif de contrôle 20 envoie également une requête au dispositif client 22, afin d'obtenir la liste des formats supportés par le dispositif client 22.

Le dispositif de contrôle 20 compare alors la liste des différents formats proposés par le serveur de diffusion 18 avec la liste des formats supportés par le dispositif client 22, et sélectionne un format commun à ces deux listes. Autrement dit, le format commun sélectionné est le second format décrit précédemment.

Afin de commander effectivement le début de la diffusion en flux, l'utilisateur lançe la lecture du fichier par l'intermédiaire du dispositif de contrôle 20, et le dispositif de contrôle 20 transmet ensuite au dispositif client 22 l'URL issue de la liste transmise par le serveur de diffusion 18 et correspondant au format commun sélectionné.

Le dispositif client 22 transmet au serveur de diffusion 18 une requête contenant l'URL précédemment reçue du dispositif de contrôle 20. Lors de l'étape 120, le serveur de diffusion 18 détermine alors si le fichier correspondant à l'URL reçue est contenu dans la mémoire interne ou bien dans la mémoire 50 du serveur web.

Lorsque le fichier correspondant à l'URL reçue est contenu dans la mémoire du serveur web 24, le serveur de diffusion 18 envoie, lors de l'étape 130, par l'intermédiaire des moyens d'activation 46, un signal d'activation des moyens de téléchargement 52 pour le téléchargement du fichier depuis le serveur web 24.

Les moyens de téléchargement 52 téléchargent alors, bloc par bloc, le fichier dans la première mémoire tampon 32. Après leur activation par le serveur de diffusion 18, les moyens de téléchargement 52 effectuent le téléchargement indépendamment du serveur de diffusion 18 et des moyens de transformation 34, et stockant au fur et à mesure chaque bloc téléchargé dans la première mémoire tampon 32.

A l'issue de l'activation du téléchargement (étape 130), ou directement après l'étape 120 si aucun téléchargement n'est nécessaire, les moyens de commande 46 envoient, lors de l'étape 140, des signaux de commande aux moyens de transformation 34, et les moyens de transformation 34 transforment alors, paquet par paquet, le fichier du premier format vers le second format, puis enregistrent le paquet transformé dans la deuxième mémoire tampon 36, lors de l'étape 150.

Dans le cas où le fichier est téléchargé depuis le serveur web 24, les moyens de commande 46 envoient les signaux de commande aux moyens de transformation 34 en l'absence du téléchargement de l'ensemble des blocs du fichier.

Lorsque le premier format correspond à des données chiffrées, la transformation d'un paquet respectif du fichier comporte le déchiffrement dudit paquet respectif par les moyens de déchiffrement 56.

Lorsque les attributs audio et/ou vidéo du deuxième format sont distincts de ceux du premier format, la transformation d'un paquet respectif du fichier comporte le transcodage audio et/ou vidéo dudit paquet respectif par les moyens de transcodage 58. Ledit paquet respectif a été éventuellement déchiffré au préalable par les moyens de déchiffrement 56.

Lorsque le deuxième format correspond à des données chiffrées, la transformation d'un paquet respectif du fichier comporte le chiffrement dudit paquet respectif par les moyens de chiffrement 60. Ledit paquet respectif a été éventuellement déchiffré au préalable par les moyens de déchiffrement 56 e/ou transcodé au préalable par les moyens de transcodage 58.

A l'issue du stockage du paquet transformé (étape 150), le serveur de diffusion 18 détermine, lors de l'étape 160, si le nombre de paquets transformés est suffisant pour l'émission du fichier à destination de l'équipement client distant 14. Autrement dit, le serveur de diffusion détermine si le nombre de paquets transformés est supérieur au nombre Nt correspondant au nombre de paquets transmis simultanément par le serveur de diffusion 18 au dispositif client 22.

Si le nombre paquets transformés est suffisant, alors le serveur de diffusion 18 commande l'émetteur-récepteur 38 pour l'émission du fichier à destination de l'équipement client distant 14, lors de l'étape 170. Les paquets transformés sont alors transférés depuis la deuxième mémoire tampon 36 vers la mémoire tampon d'émission-réception 64, en vue de leur émission de manière autonome par les moyens d'émission 62 de l'émetteur-récepteur.

Sinon, le serveur de diffusion 18 réitère le procédé à partir de l'étape de transformation 140 autant de fois que nécessaire.

Après l'émission des paquets transformés du fichier vidéo, le serveur de diffusion 18 vérifie enfin lors de l'étape 180 que l'ensemble des paquets du fichier a été transformé, et retourne dans le cas contraire à l'étape de transformation 140.

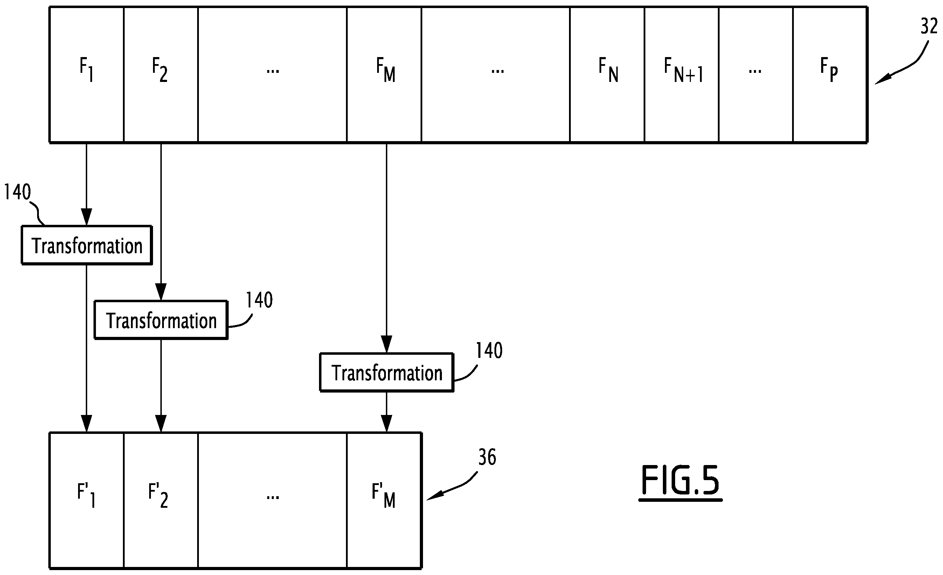

Les figures 5 à 7 illustrent de manière schématique la transformation de différents paquets d'un fichier avant leur diffusion en flux par le serveur 18 pour différents couples de valeurs de la première taille de paquet selon le premier format d'un fichier et de la deuxième taille de paquet selon le deuxième format.

Dans l'exemple de réalisation de la figure 5, la première taille de paquet est égale à la deuxième taille de paquet, et un cycle comprenant les étapes 140 à 160 a été effectué successivement M fois, avec une étape de transformation 140 à chaque cycle. La figure 5 représente également le stockage dans la première mémoire tampon 32 des paquets F₁ à F_{P} du fichier avant transformation, ainsi que le stockage dans la deuxième mémoire tampon 36 des M paquets transformés F'₁ à F'_{M} prêts à être diffusés en flux à l'équipement client distant 14.

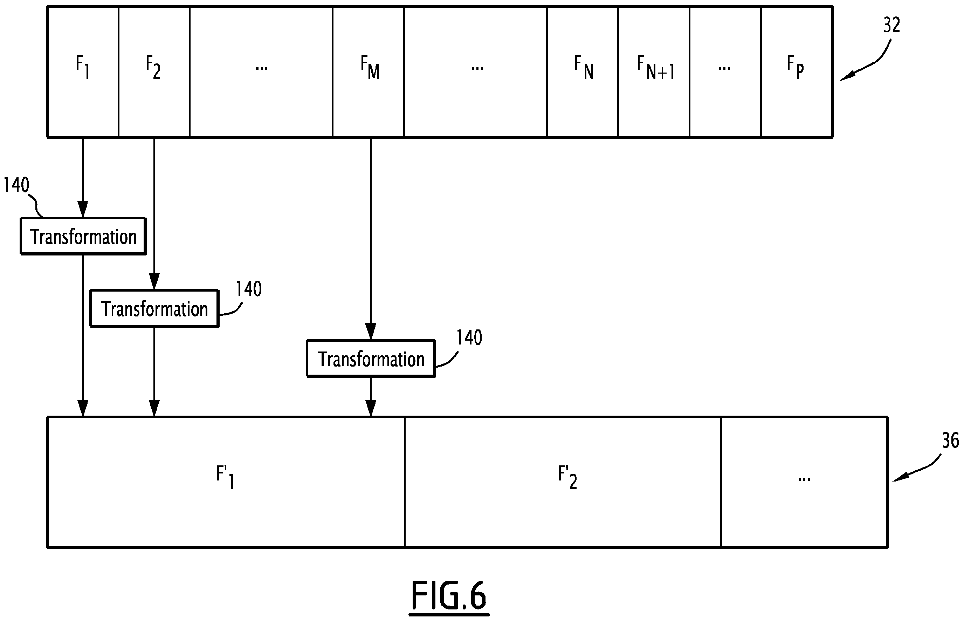

Dans l'exemple de réalisation de la figure 6, la première taille de paquet est inférieure à la deuxième taille de paquet, et un cycle comprenant les étapes 140 à 160 a été effectué successivement M fois, avec une étape de transformation 140 à chaque cycle. La deuxième taille de paquet est M fois supérieure à la première taille de paquet, le paquet transformé F'₁ correspondant aux M paquets F₁ à F_{M} du fichier avant transformation. La figure 6 représente également le stockage dans la première mémoire tampon 32 des paquets F₁ à F_{P} du fichier avant transformation, ainsi que le stockage dans la deuxième mémoire tampon 36 des paquets transformés F'₁, F'₂ prêts à être diffusés en flux.

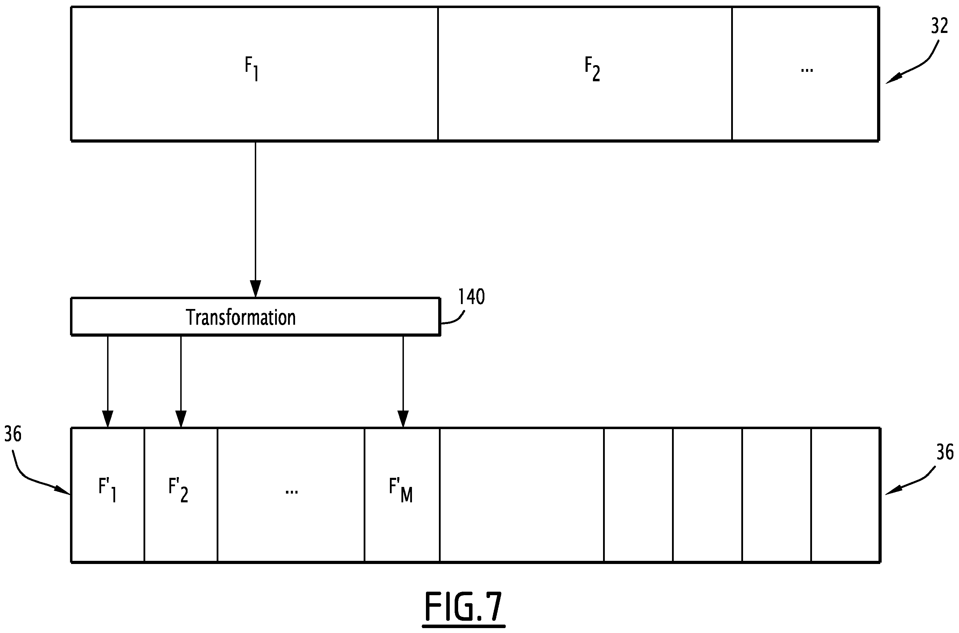

Dans l'exemple de réalisation de la figure 7, la première taille de paquet est supérieure à la deuxième taille de paquet, et le cycle comprenant les étapes 140 à 160 est effectué une fois par paquet du fichier avant transformation. La première taille de paquet est M fois supérieure à la deuxième taille de paquet, les M paquets transformés F'₁ à F'_{M} correspondant au paquet F₁ du fichier avant transformation. L'étape de transformation comporte alors une étape de duplication, le paquet F'₁ étant dupliqué M-1 fois pour obtenir les paquets F'₂ à F'_{M}. Les M paquets transformés F'₁ à F'_{M} sont identiques. La figure 7 représente également le stockage dans la première mémoire tampon 32 des paquets F₁, F₂ du fichier avant transformation, ainsi que le stockage dans la deuxième mémoire tampon 36 des paquets transformés F'₁ à F'_{M} prêts à être diffusés en flux.

Le serveur de diffusion en flux du téléphone mobile 12 selon l'invention permet ainsi de diffuser un fichier dont le format n'est pas supporté par l'équipement client distant 14, sans avoir au préalable transformé le fichier dans le format supporté. En effet, le serveur de diffusion comporte des moyens 44 de commande des moyens de transformation 34, et la transformation du fichier est alors effectuée de manière transparente pour l'utilisateur.

En outre, le serveur de diffusion en flux est propre à transmettre le fichier, paquet transformé par paquet transformé, via l'émetteur-récepteur 38 à destination de, en l'absence de la transformation de l'ensemble des paquets du fichier. Ceci permet de réduire le temps d'attente pour l'utilisateur, en transmettant au plus tôt des paquets transformés à l'équipement client 14, sans attendre que la totalité du fichier ait été transformée.

Lorsque le fichier n'est pas stocké dans une mémoire interne 32 du téléphone, mais est téléchargé depuis le serveur web 24 via le navigateur web 30, les moyens de commande 44 sont propres à envoyer les signaux de commande aux moyens de transformation 34 sans attendre que la totalité du fichier ait été téléchargée. Ceci permet également de réduire le temps d'attente pour l'utilisateur.

On conçoit ainsi que l'invention permet de proposer un téléphone mobile comprenant un serveur de diffusion en flux et des moyens de transformation d'un fichier d'un premier format vers un deuxième format, permettant de faciliter la diffusion en flux d'un fichier dont le format n'est pas supporté par l'équipement client distant.

## Revendications

1. Téléphone mobile (12), du type comprenant :
- une première mémoire tampon (32) de stockage d'un fichier de données, le fichier de données étant dans un premier format et comportant une pluralité de paquets de données,
- des moyens (34) de transformation du fichier stocké dans la première mémoire tampon (32), du premier format dans un deuxième format, les moyens de transformation (34) étant connectés en sortie de la première mémoire tampon (32),
- une deuxième mémoire tampon (36) connectée en sortie des moyens de transformation (34) et propre à stocker le fichier transformé dans le deuxième format,
- un serveur (18) de diffusion en flux de données à destination d'un équipement client distant (14) suivant un protocole réseau prédéterminé, le serveur de diffusion en flux (18) étant propre à être relié à l'équipement client distant (14) via une liaison de données (16) et à recevoir, de la part de l'équipement client distant (14), une requête de diffusion de données,
**caractérisé en ce que** le serveur de diffusion en flux (18) :
comporte des moyens (44) de commande des moyens de transformation (34), les moyens de commande (44) étant propres à envoyer aux moyens de transformation (34) un signal de commande de la transformation d'un paquet respectif du fichier, et
est propre à transmettre à l'équipement client distant (14) au moins un paquet transformé et stocké dans la deuxième mémoire tampon (36), en l'absence de la transformation de l'ensemble des paquets du fichier.

2. Téléphone mobile (12) selon la revendication 1, dans lequel le serveur de diffusion en flux (18) est propre à transmettre simultanément une pluralité de paquets transformés à l'équipement client distant (14).

3. Téléphone mobile (12) selon l'une quelconque des revendications précédentes, dans lequel les moyens de transformation (34) comprennent des moyens de transcodage audio et/ou vidéo (58), le premier et le deuxième format comportant des attributs audio et/ou vidéo, et lesdits attributs audio et/ou vidéo du deuxième format étant distincts de ceux du premier format.

4. Téléphone mobile (12) selon l'une quelconque des revendications précédentes, dans lequel les moyens de transformation (34) comprennent des moyens de déchiffrement (56), le premier format correspondant à des données chiffrées.

5. Téléphone mobile (12) selon l'une quelconque des revendications précédentes, dans lequel les moyens de transformation (34) comprennent des moyens de chiffrement (60), le deuxième format correspondant à des données chiffrées.

6. Téléphone mobile (12) selon l'une quelconque des revendications précédentes, comprenant en outre des moyens (52) de téléchargement de données depuis un serveur web (24), le fichier comportant une pluralité de blocs de données, dans lequel les moyens de téléchargement (54) sont propres à télécharger, bloc par bloc, le fichier de données dans la première mémoire tampon (32), et dans lequel les moyens de commande (44) sont propres à envoyer les signaux de commande aux moyens de transformation (34), en l'absence du téléchargement de l'ensemble des blocs du fichier.

7. Réseau local (10) de transmission de données comportant un téléphone mobile (12) et un équipement client distant (14) relié au téléphone mobile (12) via une liaison de données (16), le téléphone mobile (12) et l'équipement client distant (14) étant propres à communiquer suivant un protocole réseau prédéterminé, **caractérisé en ce que** le téléphone mobile (12) est conforme à l'une quelconque des revendications précédentes.

8. Procédé mis en oeuvre par un téléphone mobile (12) comprenant une première mémoire tampon (32), des moyens (34) de transformation de données d'un premier format dans un deuxième format, les moyens de transformation (34) étant connectés en sortie de la première mémoire tampon (32), une deuxième mémoire tampon (36) connectée en sortie des moyens de transformation (34), et un serveur de diffusion en flux (18) propre à être relié à un équipement client distant (14) via une liaison de données (16), et à recevoir, de la part de l'équipement client distant (14), une requête de diffusion de données, le procédé comprenant :
- le stockage d'un fichier de données dans la première mémoire tampon (32), le fichier de données étant dans un premier format et comportant une pluralité de paquets de données,
- l'émission par le serveur de diffusion (18) d'un signal de commande aux moyens de transformation (34),
- la transformation (140) par les moyens de transformation (34) d'un paquet respectif du fichier, sur réception dudit signal de commande, et
- le stockage (150) du paquet respectif transformé dans la deuxième mémoire tampon (36)
- la transmission à l'équipement client distant (14) d'au moins un paquet transformé et stocké dans la deuxième mémoire tampon (36), en l'absence de la transformation de l'ensemble des paquets du fichier.

9. Produit programme d'ordinateur comportant des instructions qui, lorsqu'elles sont mises en oeuvre par un calculateur intégré à un téléphone mobile (12), met en oeuvre le procédé selon la revendication 8.

## Patentansprüche

1. Mobiltelefon (12), umfassend:
- einen ersten Pufferspeicher (32) zur Speicherung einer Datendatei, wobei die Datendatei in einem ersten Format ist und eine Vielzahl von Datenpaketen umfasst,
- Mittel (34) zur Umformatierung der in dem ersten Pufferspeicher (32) gespeicherten Datei von dem ersten Format in ein zweites Format, wobei die Umformatierungsmittel (34) am Ausgang des ersten Pufferspeichers (32) angeschlossen sind,
- einen zweiten Pufferspeicher (36), der am Ausgang der Umformatierungsmittel (34) angeschlossen und geeignet ist, die in das zweite Format umformatierte Datei zu speichern,
- einen Daten-Streamingserver (18) in Richtung einer entfernten Kundenausrüstung (14) nach einem vorbestimmten Netzprotokoll, wobei der Streamingserver (18) geeignet ist, an die entfernte Kundenausrüstung (14) über eine Datenverbindung (16) angeschlossen zu werden und von der entfernten Kundenausrüstung (14) eine Datenstreaminganfrage zu empfangen,
**dadurch gekennzeichnet, dass** der Streamingserver (18):
Mittel (44) zur Steuerung der Umformatierungsmittel (34) umfasst, wobei die Steuerungsmittel (44) geeignet sind, an die Umformatierungsmittel (34) ein Signal zur Steuerung der Umformatierung eines jeweiligen Pakets der Datei zu senden, und
geeignet ist, an die entfernte Kundenausrüstung (14) mindestens ein umformatiertes und in dem zweiten Pufferspeicher (36) gespeichertes Paket bei Nichtvorliegen der Umformatierung der Gesamtheit der Pakete der Datei zu übertragen.

2. Mobiltelefon (12) nach Anspruch 1, bei dem der Streamingserver (18) geeignet ist, gleichzeitig eine Vielzahl von umformatierten Paketen an die entfernte Kundenausrüstung (14) zu übertragen.

3. Mobiltelefon (12) nach einem der vorhergehenden Ansprüche, bei dem die Umformatierungsmittel (34) Mittel zur Audio- und/oder Video-Transcodierung (58) umfassen, wobei das erste und das zweite Format Audio- und/oder Video-Attribute umfassen, und die Audio- und/oder Video-Attribute des zweiten Formats zu jenen des ersten Formats unterschiedlich sind.

4. Mobiltelefon (12) nach einem der vorhergehenden Ansprüche, bei dem die Umformatierungsmittel (34) Entschlüsselungsmittel (56) umfassen, wobei das erste Format verschlüsselten Daten entspricht.

5. Mobiltelefon (12) nach einem der vorhergehenden Ansprüche, bei dem die Umformatierungsmittel (34) Verschlüsselungsmittel (60) umfassen, wobei das zweite Format verschlüsselten Daten entspricht.

6. Mobiltelefon (12) nach einem der vorhergehenden Ansprüche, ferner umfassend Mittel (52) zum Herunterladen von Daten von einem Web-Server (24), wobei die Datei eine Vielzahl von Datenblöcken umfasst, wobei die Mittel zum Herunterladen (54) geeignet sind, Block für Block, die Datendatei in den ersten Pufferspeicher (32) herunterzuladen, und wobei die Steuerungsmittel (44) geeignet sind, die Steuerungssignale an die Umformatierungsmittel (34) bei Nichtvorliegen des Herunterladens der Gesamtheit der Blöcke der Datei zu senden.

7. Lokales Datenübertragungsnetz (10), umfassend ein Mobiltelefon (12) und eine entfernte Kundenausrüstung (14), die mit dem Mobiltelefon (12) über eine Datenverbindung (16) verbunden ist, wobei das Mobiltelefon (12) und die entfernte Kundenausrüstung (14) geeignet sind, nach einem vorbestimmten Netzprotokoll zu kommunizieren, **dadurch gekennzeichnet, dass** das Mobiltelefon (12) einem der vorhergehenden Ansprüche entspricht.

8. Verfahren, das von einem Mobiltelefon (12) eingesetzt wird, umfassend einen ersten Pufferspeicher (32), Mittel (34) zur Umformatierung von Daten von einem ersten Format in ein zweites Format, wobei die Umformatierungsmittel (34) am Ausgang des ersten Pufferspeichers (32) angeschlossen sind, einen zweiten Pufferspeicher (36), der am Ausgang der Umformatierungsmittel (34) angeschlossen ist, und einen Streamingserver (18), der geeignet ist, mit einer entfernten Kundenvorrichtung (14) über eine Datenverbindung (16) verbunden zu werden, und von der entfernten Kundenausrüstung (14) eine Datenstreaminganfrage zu empfangen, wobei das Verfahren umfasst:
- die Speicherung einer Datendatei in dem ersten Pufferspeicher (32), wobei die Datendatei in einem ersten Format ist und eine Vielzahl von Datenpaketen umfasst,
- durch den Streamingserver (18) das Senden eines Steuerungssignals an die Umformatierungsmittel (34),
- durch die Umformatierungsmittel (34) die Umformatierung (140) eines jeweiligen Pakets der Datei bei Empfang des Steuerungssignals, und
- die Speicherung (150) des jeweiligen umformatierten Pakets in dem zweiten Pufferspeicher (36),
- die Übertragung mindestens eines umformatierten und in dem zweiten Pufferspeicher (36) gespeicherten Pakets an die entfernte Kundenausrüstung (14) bei Nichtvorliegen der Umformatierung der Gesamtheit der Pakete der Datei.

9. Computerprogrammprodukt, umfassend Befehle, die, wenn sie von einem in ein Mobiltelefon (12) integrierten Rechner eingesetzt werden, das Verfahren nach Anspruch 8 einsetzen.

## Claims

1. Mobile telephone (12), of the type comprising:
- a first buffer memory (32) for storing a data file, the data file being in a first format and containing a plurality of data packets,
- means (34) for converting the file stored in the first buffer memory (32) from the first format into a second format, the conversion means (34) being connected at the output of the first buffer memory (32),
- a second buffer memory (36) connected at the output of the conversion means (34) and able to store the file converted into the second format,
- a server (18) for streaming data to a remote client device (14) in accordance with a predetermined network protocol, the streaming server (18) being able to be linked to the remote client device (14) via a data link (16) and to receive, from the remote client device (14), a request to broadcast data,
**characterized in that** the streaming server (18):
includes means (44) for controlling the conversion means (34), the control means (44) being able to send, to the conversion means (34), a signal for controlling the conversion of a respective packet of the file, and
is able to transmit, to the remote client device (14), at least one packet that is converted and stored in the second buffer memory (36), if all of the packets of the file are not converted.

2. Mobile telephone (12) according to Claim 1, wherein the streaming server (18) is able to simultaneously transmit a plurality of converted packets to the remote client device (14).

3. Mobile telephone (12) according to either one of the preceding claims, wherein the conversion means (34) comprise audio and/or video transcoding means (58), the first and the second format having audio and/or video attributes, and said audio and/or video attributes of the second format being different from those of the first format.

4. Mobile telephone (12) according to any one of the preceding claims, wherein the conversion means (34) comprise decryption means (56), the first format corresponding to encrypted data.

5. Mobile telephone (12) according to any one of the preceding claims, wherein the conversion means (34) comprise encryption means (60), the second format corresponding to encrypted data.

6. Mobile telephone (12) according to any one of the preceding claims, furthermore comprising means (52) for downloading data from a web server (24), the file containing a plurality of blocks of data, wherein the downloading means (54) are able to download, block by block, the data file into the first buffer memory (32), and wherein the control means (44) are able to send the control signals to the conversion means (34) if all of the blocks of the file are not downloaded.

7. Local data transmission network (10) including a mobile telephone (12) and a remote client device (14) linked to the mobile telephone (12) via a data link (16), the mobile telephone (12) and the remote client device (14) being able to communicate in accordance with a predetermined network protocol, **characterized in that** the mobile telephone (12) is in accordance with any one of the preceding claims.

8. Method implemented by a mobile telephone (12) comprising a first buffer memory (32), means (34) for converting data from a first format into a second format, the conversion means (34) being connected at the output of the first buffer memory (32), a second buffer memory (36) connected at the output of the conversion means (34), and a streaming server (18) able to be linked to a remote client device (14) via a data link (16) and to receive, from the remote client device (14), a request to broadcast data, the method comprising:
- storage of a data file in the first buffer memory (32), the data file being in a first format and containing a plurality of data packets,
- transmission, by the streaming server (18), of a control signal to the conversion means (34),
- conversion (140), by the conversion means (34), of a respective packet of the file, upon receipt of said control signal, and
- storage (150) of the respective converted packet in the second buffer memory (36),
- transmission, to the remote client device (14), of at least one packet that is converted and stored in the second buffer memory (36), if all of the packets of the file are not converted.

9. Computer program product including instructions that, when they are implemented by a processor integrated into a mobile telephone (12), implement the method according to Claim 8.
